# EUROPÄISCHE PATENTSCHRIFT

(11) **EP 3 121 455 B1**
(45) Veröffentlichungstag und Bekanntmachung des Hinweises auf die Patenterteilung: **22.05.2019**
(21) Anmeldenummer: 15177908.9
(22) Anmeldetag: 22.07.2015
(51) Int. Cl.: F15B 13/02, F16K 31/122, F16K 17/04

(54) **DRUCKREGEL-SITZVENTIL**
PRESSURE CONTROL SEAT VALVE
SOUPAPE DE SIEGE A REGLAGE DE PRESSION

(43) Veröffentlichungstag der Anmeldung: 25.01.2017
(73) Patentinhaber: HAWE Hydraulik SE, 85609 Aschheim (DE)
(72) Erfinder: Glaser, Johannes, 80798 München (DE); Haas, Alexander, 85469 Walpertskirchen (DE); Zwingler, Engelbert, 85625 Antholing (DE)
(74) Vertreter: Grosse Schumacher Knauer von Hirschhausen

(56) Entgegenhaltungen:
- DE-U- 7 223 233
- US-A- 2 162 898
- US-A- 3 048 188
- US-A1- 2014 034 159

## Beschreibung

Die Erfindung betrifft ein Druckregel-Sitzventil der im Oberbegriff der im Patentanspruch 1 angegebenen Art.

Bei dem aus US 2162898 A bekannten, gattungsgemäßen Druckregel-Sitzventil eines Schmierapparats ist in der Ausführungsform der Fig. 3 der Ventilkegel baulich vom Kolben getrennt und in diesem linear verschiebbar geführt. Der Kolben ist mit einem Stopfbüchsenring oder einer verdichteten Ringpackung im Gehäuse linear verschiebbar geführt und abgedichtet. Der Stopfbüchsenring hat materialbedingt nicht nur eine sehr hohe Losbrechreibung, sondern ändert sein Reibverhalten auch temperaturabhängig, so dass der Ansprechdruck, eingestellt durch die Schließfeder, variieren kann.

Bei einem aus US 3048188 A bekannten Überdruckventil ist der Kegel baulich vom Kolben getrennt und in diesem mit Spiel beweglich. Der Kolben ist mit Radialspiel im Gehäuse linear geführt und weist umfangsseitige Ausnehmungen auf, durch welche das Druckmittel nach Abheben des Ventilkegels vom Sitz abströmt.

Von Interesse sind ferner US 2014/0034159 A1 und DE 7223233 U.

Bei dem aus DE 74 28 678 U bekannten Druckregel-Sitzventil ist der Ventilkegel einstückig am Kolben angeformt und wird der Kolben in der Ventilkammer durch eine Umfangsdichtung abgedichtet. Zwischen dem Sitz und dem Reservoiranschluss ist im Kolben ein Durchgang geformt, dessen Querschnitt kleiner ist als der Querschnitt im Sitz. Der Öffnungsdruck beträgt ein Vielfaches des Schließdrucks. Unkontrollierbare Reibungskräfte des Kolbens in der Ventilkammer können sowohl den Öffnungsdruck als auch den Schließdruck beeinflussen.

Aus DE 198 25 160 A1, Fig. 5 - 8 ist ein Druckregel-Sitzventil bekannt, bei dem der Kegel, der für den Öffnungsdruck verantwortlich ist, entweder einstückig am Kolben, oder einstückig an einem im Kolben geführten Zugteil angeformt ist. Der Aufbau des Druckregel-Sitzventils ist aufwendig und erfordert unzweckmäßig hohe Fertigungspräzision, um zwischen dem Ventilkegel und dem Sitz korrekte Zusammenarbeit sicherzustellen, damit unvermeidbare Fertigungstoleranzen keinen Einfluss auf die exakte Einhaltung des Öffnungsdrucks bzw. des Schließdrucks gewinnen.

Der Erfindung liegt die Aufgabe zugrunde, ein Druckregel-Sitzventil der eingangs genannten Art dahingehend zu verbessern, dass es trotz einfacher Herstellung den Öffnungsdruck und den Schließdruck exakt reproduzieren lässt.

Die gestellte Aufgabe wird mit den Merkmalen des Patentanspruchs 1 gelöst.

Da der Ventilkegel vom Kolben baulich getrennt ist und relativ zu diesem beweglich nur vom Kolben kontaktiert wird, um die Kraft der Regelfeder zu übertragen, wird selbst mit unvermeidbaren Fertigungstoleranzen eine einwandfreie Zusammenarbeit zwischen dem Kegel und dem Sitz gewährleistet, auf welche der Kolben keinen Einfluss gewinnt. In anderen Worten können der Ventilkegel und der Kolben trotz gegenseitiger Fehlausrichtungen ihrer Führungsachsen korrekt zusammenarbeiten. Dies gewährleistet exakt reproduzierbare Öffnungs- und Schließdrücke des Druckregel-Sitzventils über eine Vielzahl Arbeitszyklen, wie es beispielsweise in einem elektrohydraulisch betriebenen Handwerkzeug, z.B. zum Verpressen von Kabelschuhen, wichtig ist. Das Druckregel-Sitzventil öffnet bei Erreichen des vorbestimmten Öffnungsdrucks schlagartig und weit, da nicht nur die Unterschiede der Beaufschlagungsflächen wirken, sondem auch der über die Drosselstelle erzeugte Staudruck, der den Kolben in die maximale Öffnungsstellung verlagert. Das Druckregel-Sitzventil bleibt in der Offenstellung, selbst wenn der Druck in der Ventilkammer aus verschiedenen Gründen variieren sollte, wobei der Ventilkegel die Schließstellung erst wieder einnimmt, wenn der vorbestimmte Schließdruck erreicht wird Der Kolben ist in der Ventilkammer linear geführt, und wird der Ventilkegel in einem den Sitz aufweisenden, die Ventilkammer begrenzenden Einsatz linear geführt. Der Kolben und der Ventilkegel sind nur in der gemeinsamen Führungsrichtung kraftschlüssig miteinander gekoppelt. Fehlausrichtungen zwischen den Führungsrichtungen von Kolben und Ventilkegel beeinflussen die Ventilfunktion nicht, da eine formschlüssige lineare Kopplung zwischen dem Ventilkegel und dem Kolben bewusst vermieden ist. Um für den Ventilkegel günstige und vor allem konstante Gleiteigenschaften bei seinen Spielbewegungen im Einsatz sicherzustellen, weist der Ventilkegel wenigstens einen Kolbenring auf, der ein bewusst vorgesehenes Spiel zwischen dem Umfang des Ventilkegels und einer Bohrung des Einsatzes eigenfedernd überbrückt. Der Kolben und der Ventilkegel weisen gegenseitige Anlagebereiche auf, die so kraftschlüssig zusammenwirken, dass Relativbewegungen zwischen dem Kolben und dem Ventilkegel quer zu den Führungsrichtungen des Ventilkegels und des Kolbens möglich sind. Dieses Resultat der baulichen Trennung zwischen Ventilkegel und Kolben vereinfacht die Herstellung des Druckregel-Sitzventils, weil der negative Einfluss unvermeidlicher Fertigungstoleranzen vermieden wird.

Bei einer zweckmäßigen Ausführungsform wird der Kolben mit seinem Umfang mit Spiel an der Kammerwand der als Passbohrung ausgebildeten Ventilkammer geführt. Dies sichert die Leichtgängigkeit des Kolbens bei der Übertragung der Kraft der Regelfeder und bei der hydraulischen Teilentlastung der Regelfeder nach Erreichen des Öffnungsdrucks. Um jedoch für den Kolben gleichförmige Gleitverhältnisse sicherzustellen, weist der Umfang des Kolbens wenigstens einen das Spiel eigenfedernd überbrückenden Kolbenring auf. Dieser Kolbenring ist in der Funktion verschieden von einem Gleitdichtring, der unter Kompression wirkt und dessen Reibungshemmung variieren kann, weil der Kolbenring nur mit seiner Eigenfederung und der Gleiteigenschaft der Materialpaarung wirkt.

Der Kolbenring ist beweglich in einer Umfangsnut des Kolbens angeordnet, vorzugsweise nahe der zum Ventilkegel weisenden Kolben-Beaufschlagungsfläche. Der Kolbenring stellt die gleichmäßigen Gleiteigenschaften so in dem Bereich sicher, in welchem die Kraft der Regelfeder vom Kolben auf den Ventilkegel übertragen wird, und wo in der Ventilkammer die hydraulische Entlastung der Kraft der Regelfeder erfolgt.

Im Hinblick auf sehr konstante aber extrem niedrige Gleithemmung ist es zweckmäßig, wenn der Kolbenring einen Kunststoff, wie PTFE aufweist. Der Kolbenring besitzt quadratischen oder rechteckigen Querschnitt und ist an einer Umfangsposition geschlitzt. Der Schlitz verläuft schräg zum Verlauf des Kolbenrings, um in Führungsrichtung möglichst wenig Leckage zuzulassen.

Um sicherzustellen, dass im Bereich der Regelfeder kein die Funktion verfälschender Druckaufbau stattfindet, ist es zweckmäßig, den die Regelfeder enthaltenden Teil der Ventilkammer unter Umgehen des Kolbens zu entlasten, z.B. zur Seite des Reservoiranschlusses.

Die Drosselstelle, die separat vom Kolben vorgesehen ist, wird zweckmäßig in einer Seitenwand der Ventilkammer oder im Einsatz angeordnet, wobei stets eine permanente Verbindung zum Sitz vorgesehen sein sollte, damit die Drosselwirkung der Drosselstelle unabhängig von Bewegungen des Kolbens bzw. des Ventilkegels bleibt. Die Druckdifferenz über die Drosselstelle ist natürlich bei Erreichen des Öffnungsdrucks größer als bei Erreichen des wesentlich niedrigeren Schließdrucks. Diese physikalisch bedingte Abnahme der Drosselwirkung ist für die Funktion des Druckregel-Sitzventils vorteilhaft.

Um eine Anpassung an unterschiedliche Öffnungs- bzw. Schließdruck-Werte nicht nur über oder ohne die Regelfeder vornehmen zu können, kann es zweckmäßig sein, die Drosselstelle als auswechselbaren Drosseleinsatz auszubilden.

Um das Druckregel-Sitzventil auch mechanisch betätigen zu können, ist es zweckmäßig, wenn der Ventilkegel am dem Kolben abgewandten Ende aus dem Einsatz vorsteht, und das Ende eine Einschnürung und/oder einen Notaus-Drücker aufweist. An der Einschnürung kann ein Rückzugs-Stopp-Hebel zum Zugangriff gebracht werden, um den vom Sitz abgehobenen Ventilkegel auf den Sitz zu setzen. Der Notaus-Drücker erlaubt es, schon vor Erreichen des Öffnungsdrucks mechanisch den Ventilkegel vom Sitz abzuheben.

Zweckmäßig ist das Druckregel-Sitzventil als Ventilpatrone, insbesondere Einschraubpatrone, ausgebildet, die in geringem Bauraum montierbar ist.

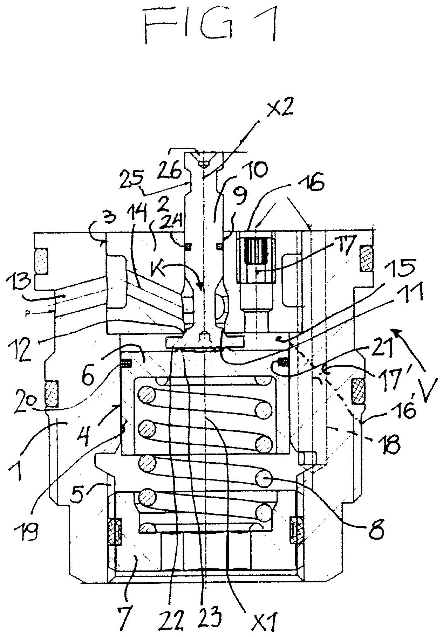

Anhand der Zeichnungen wird eine Ausführungsform des Erfindungsgegenstandes erläutert. Die Figur 1 ist ein Axialschnitt eines Druckregel-Sitzventils in drucklosem Schließzustand.

Das Druckregel-Sitzventil V gemäß Fig. 1 ist beispielsweise als kombiniertes Druckbegrenzungs- und Umschaltventil in einem elektrohydraulisch betriebenen Handwerkzeug zweckmäßig, in welchem ein Werkzeugkolben von einer Druckquelle bis zum Erreichen eines maximalen Werkzeugdrucks entsprechend dem Öffnungsdruck des Druckregel-Sitzventils V verfahren wird, dann die Druckquelle abgeschaltet wird, und der Werkzeugkolben unter der Kraft einer Rückstellfeder entweder bis in die Ausgangsstellung, oder bis zu einer wählbaren Position zurückfährt. Das Druckregel-Sitzventil V öffnet mit seiner normalen Regelfunktion beim Erreichen des Öffnungsdrucks entsprechend dem maximalen Werkzeugdruck, bleibt dann über den Rücklauf des Werkzeugkolbens offen und schließt beim Erreichen des Schließdrucks, d.h. sobald der vom Werkzeugkolben erzeugte Rücklaufdruck nicht mehr ausreicht, das Druckregel-Sitzventil V offenzuhalten.

In der gezeigten Ausführungsform in Fig. 1 ist das Druckregel-Sitzventil V als Einschraub-Ventilpatrone ausgebildet.

In einem Gehäuse 1 ist in einem Bohrungsabschnitt 3 ein ringförmiger Einsatz 2 angeordnet, der eine Bohrung 9 mit einem Sitz 12 enthält. In einem mittleren Bohrungsabschnitt 4 im Gehäuse 1 ist ein als Topfkolben ausgebildeter Kolben 6 verschiebbar geführt, der von einer Regelfeder 8 belastet wird, die sich an einem in einen Gewindebohrungsabschnitt 5 eingeschraubten, hier durchgängigen Federwiderlager 7 abstützt.

In der Bohrung 9 des Einsatzes 2 ist ein Ventilkegel K verschiebbar geführt, der eine Dichtfläche 11 zur Zusammenwirkung mit dem Sitz 12 aufweist, und von dem ein Verlängerungsschaft 10 über den Einsatz 2 nach außen vorsteht.

In der gezeigten Ausführungsform ist im Einsatz 2, der z.B. einen Druckanschluss 13 im Gehäuse 1 aufweist, ein Kanal 14 zum Sitz 12 bzw. der Bohrung 9 vorgesehen, und ein Reservoiranschluss 16, welcher mit einer Drosselstelle 17 kombiniert ist, die einen Querschnitt aufweist, der kleiner ist als die Beaufschlagungsfläche des Ventilkegels K im Sitz 12. Zur Seite des Reservoiranschlusses 16 kann ferner aus dem die Regelfeder 8 enthaltenden Teil einer Ventilkammer 15 eine Entlastungsbohrung 18 führen.

Alternativ ist in Fig. 1 strichpunktiert der Reservoiranschluss 16' in der Seitenwand der Ventilkammer 15 gezeigt, und ist die Drosselstelle 17' im Verlauf eines Verbindungskanals zum Reservoiranschluss 16' dargestellt. In der Praxis kann der Verbindungskanal durch die Seitenwand der Ventilkammer 15 zweckmäßig als Drosselstelle 17' mit passendem Querschnitt ausgebildet werden.

Der Kolben 6 ist mit radialem Spiel im Bohrungsabschnitt 4 (Passbohrung) geführt, wobei in seinem Umfang 19 wenigstens eine Umfangsnut 21 geformt ist, in welcher ein Kolbenring 20 enthalten ist, der das Spiel zur Bohrungswand 4 eigenfedernd überbrückt. Der Kolbenring 20 besteht beispielsweise aus Kunststoff oder Verbundkunststoff, wie einem PTFE, ist an einer Umfangsposition geschlitzt, zweckmäßig mit schräg verlaufenden Schlitzwänden. Der Kolbenring 20 stellt gleichbleibende Gleitverhältnisse mit niedrigem Gleitreibungsfaktor für den Kolben 6 sicher.

Als Option kann auch der Verlängerungsschaft 10 des Ventilkegels K mit einem Kolbenring 24 in der Bohrung 9 des Einsatzes geführt sein, um trotz eines gute Leichtgängigkeit gewährleistenden Radialspiels gleichmäßige Gleiteigenschaften für den Ventilkegel K bei dessen Spielbewegungen relativ zum Sitz 12 sicherzustellen.

Am Verlängerungsschaft 10 des Ventilkegels K ist eine Einschnürung 25 angedeutet, und ein Notaus-Drückende 26. In der Einschnürung 25 kann ein nicht gezeigter Umlenkhebel angreifen, um den Ventilkegel mechanisch in die gezeigte Schließstellung auf den Sitz 12 zu ziehen. Umgekehrt kann das Notaus-Drückende 26 benutzt werden, um mechanisch, beispielsweise manuell, den Ventilkegel K vom Sitz 12 abzuheben.

Ein weiteres wichtiges Merkmal liegt darin, dass der Ventilkegel K einen Endflansch 22 mit im wesentlichen ebener Endfläche aufweist, hingegen der Kolben 6 Vorsprünge oder einen Ringwulst 23 zur Zusammenarbeit mit dem Endflansch 22, derart, dass eine Kraftübertragung in Richtung der Achsen X1, X2 stattfindet, jedoch quer zu den Achsen X1, X2 relative Beweglichkeit zwischen dem Ventilkegel K und dem Kolben 6 gegeben ist. Auf diese Weise werden ggf. aufgrund von Fertigungstoleranzen entstehende Querversetzungen oder Knickungen zwischen den idealerweise fluchtenden Achsen X1, X2 dem Einfluss auf die Zusammenarbeit zwischen dem Ventilkegel K und dem Sitz 12 einerseits und dem Kolben 6 andererseits entzogen. Dies vereinfacht den Bearbeitungsaufwand bei der Herstellung und Montage der Komponenten des Druckregel-Sitzventils V.

### Funktion:

Das Druckregel-Sitzventil V kann auf einen Öffnungsdruck bis zu etwa 600 bar ausgelegt sein. Sobald der Druck im Druckanschluss 13 den Öffnungsdruck erreicht, wird die Dichtfläche 11 des Ventilkegels K etwas vom Sitz 12 abgehoben, und zwar gegen die Druckkraft des Kolbens 6 unter der Wirkung der Regelfeder 8. Druckmittel schießt aus dem Druckanschluss 13, den Kanal 14 und durch den Sitz 12 in die Ventilkammer 15 und beaufschlagt dort die wesentlich größere Beaufschlagungsfläche des Kolbens 6, der somit schlagartig in eine nach unten verlagerte Position, beispielsweise bis zur Anlage am Federwiderlager 7, bewegt wird. Gleichzeitig entsteht aufgrund der Drosselwirkung der Drosselstelle 17 ein zunehmender Staudruck in der Ventilkammer 15, durch welchen die vom Kolben 6 auf den Ventilkegel K übertragene Kraft der Regelfeder 8 hydraulisch verringert oder sogar aufgehoben wird. Im Resultat verbleibt der Kolben 6 in seiner vollen Öffnungsstellung, und kann der Ventilkegel K eine adäquate Öffnungsstellung relativ zum Sitz 12 halten, wobei Druckmittel aus dem Druckanschluss 13 über den Reservoiranschluss 16 abströmt. Nimmt die Menge korrespondierend ab, dann sinkt auch der Staudruck in der Ventilkammer 15 auf dem Kolben 6. Sobald der Druck im Druckanschluss 13 unter den Schließdruck zu fallen droht, drückt der Kolben 6 aufgrund der Regelfeder 8 den Ventilkegel K exakt mit Erreichen des Schließdrucks auf den Sitz 12. Der Restdruck in der Ventilkammer 15 baut sich über die Drosselstelle 17 zum Reservoiranschluss 16 ab. Die Regelfeder 8 hält den Ventilkegel K und somit das Druckregel-Sitzventil V in der Schließstellung, bis am Druckanschluss 13 erneut der Öffnungsdruck erreicht wird.

## Patentansprüche

1. Druckregel-Sitzventil (V), insbesondere für elektrohydraulische Handwerkzeuge, mit einem Sitz (12) zwischen einem Druckanschluss (13) und einem in einer Ventilkammer (15) angeordneten Reservoiranschluss (16, 16'), einem durch eine Regelfeder (8) in Richtung zum Sitz (12) beaufschlagten Ventilkegel (K) in der Ventilkammer (15), und einem Kolben (6) in der Ventilkammer (15), der die Kraft der Regelfeder (8) auf den Ventilkegel (K) überträgt, wobei die Beaufschlagungsfläche des Kolbens (6) ein Vielfaches der Beaufschlagungsfläche des Ventilkegels (K) im Sitz (12) beträgt, um einen hohen Öffnungsdruck und einen wesentlich niedrigeren Schließdruck einzustellen und nach Ansprechen des Druckregel-Sitzventils bei Erreichen des Öffnungsdrucks den Ventilkegel (K) bis zum Erreichen des Schließdrucks vom Sitz (12) abgehoben zu halten, wobei zum hydraulischen Verringern der vom Kolben (6) auf den Ventilkegel (K) ausgeübten Kraft der Regelfeder (8) im oder beim Reservoiranschluss (16, 16') eine Drosselstelle (17, 17') mit kleinerem Querschnitt als die Beaufschlagungsfläche des Ventilkegels (K) im Sitz (12) vorgesehen, und der Ventilkegel (K) baulich vom Kolben (6) getrennt und relativ zu diesem beweglich nur an den Kolben (6) angelegt ist, **dadurch gekennzeichnet, dass** der Kolben (6) in der Ventilkammer (15) linear geführt ist, dass der Ventilkegel (K) in einem den Sitz (12) aufweisenden, die Ventilkammer (15) begrenzenden Einsatz (2) eines Gehäuses (1) linear geführt ist, und dass der Ventilkegel (K) mit Spiel in einer Passbohrung (9) im Einsatz (2) geführt ist und wenigstens einen das Spiel eigenfedernd überbrückenden, an wenigstens einer Umfangposition geschlitzten Kolbenring (24) aufweist.

2. Druckregel-Sitzventil nach Anspruch 1, **dadurch gekennzeichnet, dass** gegenseitige Anlagebereiche (22, 23) zwischen dem Ventilkegel (K) und dem Kolben (6) deren Relativbewegungen quer zu den Führungsrichtungen (X1, X2) des Kolbens (6) und des Ventilkegels (K) zulassen, vorzugsweise eine in den Führungsrichtungen nur kraftschlüssige unidirektionale Kopplung vorgesehen ist.

3. Druckregel-Sitzventil nach Anspruch 1, **dadurch gekennzeichnet, dass** der Kolben (6) mit seinem Umfang (19) mit Spiel zur als Passbohrung (4) ausgebildeten Kammerwand geführt ist und im Umfang (19) wenigstens einen das Spiel eigenfedernd überbrückenden, an wenigstens einer Umlaufposition geschlitzten Kolbenring (20) aufweist.

4. Druckregel-Sitzventil nach Anspruch 3, **dadurch gekennzeichnet, dass** der Kolbenring (20) beweglich in einer Umfangsnut (21) des Kolbens (6) nahe der zum Ventilkegel (K) weisenden Beaufschlagungsfläche des Kolbens (6) angeordnet ist.

5. Druckregel-Sitzventil nach Anspruch 4, **dadurch gekennzeichnet, dass** der Kolbenring (20) einen Kunststoff wie PTFE aufweist.

6. Druckregel-Sitzventil nach wenigstens einem der vorhergehenden Ansprüche, **dadurch gekennzeichnet, dass** ein die Regelfeder (8) enthaltender Teil der Ventilkammer (15) unter Umgehen des Kolbens (6) druckentlastet ist.

7. Druckregel-Sitzventil nach wenigstens einem der vorhergehenden Ansprüche, **dadurch gekennzeichnet, dass** die Drosselstelle (17, 17') mit permanent offener Verbindung zum Sitz (12) in einer Seitenwand der Ventilkammer (15) oder im Einsatz (2) angeordnet ist.

8. Druckregel-Sitzventil nach Anspruch 7, **dadurch gekennzeichnet, dass** die Drosselstelle (17) als auswechselbarer Drosseleinsatz ausgebildet ist.

9. Druckregel-Sitzventil nach wenigstens einem der vorhergehenden Ansprüche, **dadurch gekennzeichnet, dass** der Ventilkegel (K) am dem Kolben (6) abgewandten Ende (10) aus dem Einsatz (2) vorsteht, und dass das Ende (10) eine Einschnürung (25) zum Zug-Angriff eines Rückzugsstopp-Hebels und/oder einen Notaus-Drücker (26) aufweist.

10. Druckregel-Sitzventil nach wenigstens einem der vorhergehenden Ansprüche, **dadurch gekennzeichnet, dass** das Druckregel-Sitzventil (V) als Ventilpatrone, insbesondere Einschraubpatrone, ausgebildet ist.

## Claims

1. Pressure-regulating seat valve (V), in particular for electrohydraulic hand tools, having a seat (12) between a pressure connection (13) and a reservoir connection (16, 16') arranged in a valve chamber (15), a valve cone (K) in the valve chamber (15) which is loaded into the direction of the seat (12) by a regulating spring (8), and a piston (6) in the valve chamber (15) which transmits the force of the regulating spring (8) to the valve cone (K), wherein the loading surface of the piston (6) is a multiple of the loading surface of the valve cone (K) in the seat (12) in order to set a high opening pressure and a substantially lower closing pressure, and to keep the valve cone (K) raised from the seat (12) after the pressure regulating seat valve responds when the opening pressure is reached until the closing pressure is reached, wherein for hydraulic reduction of the force of the regulating spring (8) applied by the piston (6) on the valve cone (K), in or at the reservoir connection (16, 16') a throttling point (17, 17') having a smaller cross-section than the loading surface of the valve cone (K) is provided in the seat, and the valve cone (K) is structurally separated from the piston (6) and is only applied movably relative to the latter to the piston (6), **characterized in that** the piston (6) is guided linearly in the valve chamber (15), **in that** the valve cone (K) is guided linearly in an insert (2) of a housing (1) which has the seat (12) and delimits the valve chamber (15), and **in that** the valve cone (K) is guided with play in a fitting bore (9) in the insert (2) and has at least one piston ring (24), which bypasses the play self-springing and is slotted at at least one circumferential position.

2. Pressure-regulating seat valve according to Claim 1, **characterized in that** mutual contact regions (22, 23) between the valve cone (K) and the piston (6) permit their relative movements transversely to the guide directions (X1, X2) of the piston (6) and of the valve cone (K), preferably an only non-positive unidirectional coupling is provided in the guide directions.

3. Pressure-regulating seat valve according to claim 1, **characterized in that** the piston (6) is guided with its circumference (19) with play to the chamber wall constructed as a fitting bore (4) and has in its circumference (19) at least one piston ring (20) which bypasses the play self-springing and is slotted at at least one circumferential position.

4. Pressure-regulating seat valve according to Claim 3, **characterized in that** the piston ring (20) is movably arranged in a circumferential groove (21) of the piston (6) near the loading surface of the piston (6) pointing towards the valve cone (K).

5. Pressure-regulating seat valve according to Claim 4, **characterized in that** the piston ring (20) has a plastic such as PTFE.

6. Pressure-regulating seat valve according to at least one of the preceding claims, **characterized in that** a part of the valve chamber (15) containing the regulating spring (8) is pressure-relieved by bypassing the piston (6).

7. Pressure-regulating seat valve according to at least one of the preceding claims, **characterized in that** the throttling point (17, 17') with permanently open connection to the seat (12) is arranged in a side wall of the valve chamber (15) or in the insert (2).

8. Pressure-regulating seat valve according to Claim 7, **characterized in that** the throttling point (17) is designed as an exchangeable throttling insert.

9. Pressure-regulating seat valve according to at least one of the preceding claims, **characterized in that** the valve cone (K) projects from the insert (2) at the end (10) averted from the piston (6), and **in that** the end (10) has a constriction (25) for pulling engagement of a retraction stop lever and/or an emergency stop knob (26).

10. Pressure-regulating seat valve according to at least one of the preceding claims, **characterized in that** the pressure-regulating seat valve (V) is designed as a valve cartridge, in particular a screw-in cartridge.

## Revendications

1. Valve (V) de régulation de pression à siège, en particulier pour outils portatifs électrohydrauliques, comprenant un siège (12) entre un raccord de pression (13) et un raccord de réservoir (16, 16') dans la chambre de soupape (15), un cône de soupape (K), situé dans ladite chambre de soupape (15), qui est sollicité vers ledit siège (12) par un ressort de réglage (8), et un piston (6) dans ladite chambre de soupape (15) destiné à transférer la force du ressort de réglage (8) sur le cône de soupape (K), la surface de pressurisation dudit piston (6) étant plusieurs fois supérieur à la surface de pressurisation dudit cône de soupape (K) dans le siège (12) afin d'établir une pression élevée d'ouverture et une pression de fermeture sensiblement inférieure et afin de maintenir ledit cône de soupape (K), après le déclenchement de ladite valve de régulation de pression à siège lorsque la pression d'ouverture est atteint, en état écarté dudit siège (12) jusqu'à ce que la pression de fermeture est atteint, un point d'étranglement (17, 17'), qui a une section transversale inférieure à la surface de pressurisation dudit cône de soupape (K) dans le siège (12), étant prévu dans ou près dudit raccord de réservoir (16, 16') afin de réduire hydrauliquement la force dudit ressort de réglage (8) appliquée par ledit piston (6) sur ledit cône de soupape (K), et ledit cône de soupape (K) étant structurellement séparé dudit piston (6) et mobile par rapport à celui-ci en étant seulement en appui sur ledit piston (6), **caractérisée en ce que** ledit piston (6) est guidé de manière linéaire dans ladite chambre de soupape (15), **en ce que** ledit cône de soupape (K) est guidé de manière linéaire dans un insert (2) d'un boîtier (1), ledit insert comprenant ledit siège (12) et délimitant ladite chambre de soupape (15), et **en ce que** ledit cône de soupape (K) est guidé avec jeu dans un alésage d'ajustement (9) dans ledit insert (2) et comprend au moins un segment de piston (24) qui est fendu à au moins un endroit sur sa périphérie et qui est destiné à compenser le jeu de manière auto-élastique.

2. Valve de régulation de pression à siège selon la revendication 1, **caractérisée en ce que** des zones d'appui mutuel (22, 23) entre ledit cône de soupape (K) et ledit piston (6) permettent des mouvements relatifs entre ces derniers en travers des directions de guidage (X1, X2) dudit piston (6) et dudit cône de soupape (K), et de préférence un couplage unidirectionnel est prévu qui dans les directions de guidage n'est que par adhérence.

3. Valve de régulation de pression à siège selon la revendication 1, **caractérisée en ce que** ledit piston (6) est guidé par sa périphérie avec du jeu à la paroi de ladite chambre réalisée en forme d'un alésage d'ajustement (4) et comprend à sa périphérie au moins un segment de piston (20) qui est fendu à au moins un endroit sur sa périphérie et qui est destiné à compenser le jeu de manière auto-élastique.

4. Valve de régulation de pression à siège selon la revendication 3, **caractérisée en ce que** ledit segment de piston (20) est disposé de façon mobile dans une rainure périphérique (21) dudit piston (6) près de la surface de pressurisation dudit piston (6) faisant face audit cône de soupape (K).

5. Valve de régulation de pression à siège selon la revendication 4, **caractérisée en ce que** ledit segment de piston (20) comporte une matière plastique telle que PTFE.

6. Valve de régulation de pression à siège selon au moins l'une quelconque des revendications précédentes, **caractérisée en ce qu'**une partie de ladite chambre de soupape (15) qui contient ledit ressort de réglage (8) est dépressurisée en contournant ledit piston (6).

7. Valve de régulation de pression à siège selon au moins l'une quelconque des revendications précédentes, **caractérisée en ce que** le point d'étranglement (17, 17') est disposé dans une paroi latérale de ladite chambre de soupape (15) ou dans l'insert (2) et il est en communication continuellement ouverte audit siège (12).

8. Valve de régulation de pression à siège selon la revendication 7, **caractérisée en ce que** le point d'étranglement (17, 17') est réalisé en forme d'un insert remplaçable d'étranglement.

9. Valve de régulation de pression à siège selon au moins l'une quelconque des revendications précédentes, **caractérisée en ce que** ledit cône de soupape (K) fait saillie de l'insert (2) à l'extrémité (10) opposée audit piston (6), et **en ce que** ladite extrémité (10) comprend une constriction (25) pour une attaque tirante d'un levier d'arrêt de retrait et/ou un bouton d'arrêt d'urgence.

10. Valve de régulation de pression à siège selon au moins l'une quelconque des revendications précédentes, **caractérisée en ce que** ladite valve (V) de régulation de pression à siège est réalisé en forme d'une cartouche de valve, en particulier une cartouche vissée.
